# EUROPÄISCHE PATENTSCHRIFT

(11) **EP 3 963 264 B1**
(45) Veröffentlichungstag und Bekanntmachung des Hinweises auf die Patenterteilung: **11.06.2025**
(21) Anmeldenummer: 20722260.5
(22) Anmeldetag: 22.04.2020
(51) Int. Cl.: F24C 14/00, F24C 15/00, F22B 37/48

(54) **HAUSHALTS-DAMPFBEHANDLUNGSGERÄT UND VERFAHREN ZUM BETREIBEN EINES HAUSHALTS-DAMPFBEHANDLUNGSGERÄTS**
HOUSEHOLD STEAM TREATMENT APPLIANCE AND METHOD FOR OPERATING A HOUSEHOLD STEAM TREATMENT APPLIANCE
APPAREIL DOMESTIQUE DE TRAITEMENT À LA VAPEUR ET PROCÉDÉ POUR FAIRE FONCTIONNER UN APPAREIL DOMESTIQUE DE TRAITEMENT À LA VAPEUR

(30) Priorität: 03.05.2019 DE 102019206324
(43) Veröffentlichungstag der Anmeldung: 09.03.2022
(73) Patentinhaber: BSH Hausgeräte GmbH, 81739 München (DE)
(72) Erfinder: CLAUSS, Christian, 67210 Obernai (FR); FISCHER, Harry, 75015 Bretten (DE); SCHALL, Rudolf, 76646 Bruchsal (DE)
(86) Internationale Anmeldenummer: PCT/EP2020/061219
(87) Internationale Veröffentlichungsnummer: WO 2020/224965

(56) Entgegenhaltungen:
- EP-A1- 3 076 086

## Beschreibung

Die Erfindung betrifft ein Haushalts-Dampfbehandlungsgerät, aufweisend einen mittels einer Tür verschließbaren Dampfbehandlungsraum, eine Dampferzeugungseinrichtung zum Erzeugen vom Dampf, einen Wassertank zum Bereitstellen von Flüssigkeit für die Dampferzeugungseinrichtung und eine Pumpe zum Pumpen von Flüssigkeit aus dem Wassertank zu der Dampferzeugungseinrichtung. Die Erfindung ist insbesondere vorteilhaft anwendbar auf Haushaltsgeräte zur Dampfbehandlung von Speisen, speziell auf Dampfgargeräte.

DE 10 2012 109 631 A1 offenbart ein Gargerät mit einem Garraum zur Behandlung von Gargut und mit einer Dampferzeugungseinrichtung zur Erzeugung von Dampf. Das zur Erzeugung des Dampfes verwendete Wasser ist über eine Koppeleinrichtung der Dampferzeugungseinrichtung zuführbar. Die Koppeleinrichtung weist eine zur Verbindung mit einem Festwasseranschluss geeignete Anschlusseinrichtung auf. Dabei ist zwischen der Anschlusseinrichtung und der Dampferzeugungseinrichtung eine Leitungseinrichtung vorgesehen, die eine zum Leiten von Wasser geeignete Strömungsverbindung bereitstellt und eine freie Fallstrecke umfasst. In der freien Fallstrecke ist eine Wasserführungseinrichtung angeordnet.

FR 2958719 A1 offenbart einen Ofen, der einen in einem Gehäuse ausgebildeten Garraum und einen Dampferzeuger, der in den Garraum einbringbaren Dampf erzeugt, aufweist. Ein Wassereinfüllventil versorgt ein hydraulisches System mit Wasser aus dem Dampferzeuger. Ein Wassereinfüllteil umfasst eine Wasserzufuhröffnung des Hydrauliksystems. Ein Ablaufteil weist eine Wasserablauföffnung des Hydrauliksystems auf. Die Wasserzufuhröffnung und die Wasserablauföffnung sind in einer Auslassposition des Ventils an einer Außenseite des Ofens zugänglich. Weiterer Stand der Technik ist der EP 3 076 086 A1 zu entnehmen.

Es ist die **Aufgabe** der vorliegenden Erfindung, die Nachteile des Standes der Technik zumindest teilweise zu überwinden und insbesondere eine Möglichkeit zur besonders einfachen und bedienerfreundlichen Nutzung eines Dampfbehandlungsgeräts bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Erfindungsgemäß weist das Haushalts-Dampfbehandlungsgerät, im folgenden Dampfbehandlungsgerät genannt,
- eine Dampferzeugungseinrichtung zum Erzeugen vom Dampf,
- einen Wassertank zum Bereitstellen von Flüssigkeit für die Dampferzeugungseinrichtung und
- drei Pumpen auf.

Die Verwendung der drei Pumpen ermöglicht es, neben einem üblichen Nachfüllen der Dampferzeugungseinrichtung mit Wasser aus dem Wassertank Flüssigkeit auf einfache und bedienerfreundliche Weise in das Gerät zu pumpen, Flüssigkeit aus dem Gerät abzulassen und/oder Flüssigkeit in dem Gerät zirkulieren zu lassen. Dabei sind der Wassertank und die Dampferzeugungseinrichtung aufgrund der Förderwirkung der Pumpen zudem vorteilhafterweise grundsätzlich beliebig im Gerät positionierbar, beispielsweise oberhalb des Dampfbehandlungsraums.

Das Dampfbehandlungsgerät weist in einer Weiterbildung einen mittels einer Tür verschließbaren Dampfbehandlungsraum auf. In noch einer Weiterbildung weist das Dampfbehandlungsgerät mindestens einen Heizkörper zum Aufheizen des Dampfbehandlungsraums und/oder des darin befindlichen Guts auf und kann dann auch als Dampfgargerät bezeichnet werden, und dessen Dampfbehandlungsraum als Garraum. Das Dampfbehandlungsgerät kann z.B. ein Backofen mit Dampfbehandlungsfunktion, ein Mikrowellengerät mit Dampfbehandlungsfunktion oder Backofen mit Mikrowellen- und Dampfbehandlungsfunktion sein. In dem Garraum befindliches Gut kann wahlweise ohne Dampfzugabe gegart, unter Dampfzugabe gegart oder nur mit Dampf behandelt werden.

Die Dampferzeugungseinrichtung kann in einer Weiterbildung eine in einem Boden des Dampfbehandlungsraums eingelassene heizbare Wasserschale sein. Es ist eine Weiterbildung, dass die Dampferzeugungseinrichtung außerhalb des Dampfbehandlungsraums angeordnet ist, z.B. in Form eines Boilers oder eines Durchlauferhitzers. Der Dampferzeuger lässt sich mittels einer der Pumpen aus dem Wassertank mit Flüssigkeit befüllen.

Der Dampferzeuger weist zur Dampferzeugung mindestens ein Heizelement auf, bei dessen Aktivierung in dem Dampferzeuger befindliches Wasser auf Siedetemperatur erhitzbar ist. Der dadurch erzeugte Dampf wird in den Dampfbehandlungsraum eingebracht.

Es ist eine Weiterbildung, dass der Wassertank ein nutzerseitig entnehmbarer Wassertank ist und dann typischerweise durch einen Nutzer mit Wasser füllbar ist. Es ist eine Weiterbildung, dass der Wassertank fest in dem Gerät verbaut ist. Er kann dann z.B. nutzerseitig über eine Einfüllöffnung mit Wasser befüllt werden. Alternativ oder zusätzlich ist der Wassertank über einen Festwasseranschluss mit Wasser befüllbar.

Der Dampferzeuger kann einen Füllstandssensor aufweisen. Dieser kann z.B. dazu eingerichtet sein, einen Leerstand und/oder ein Erreichen eines maximalen Füllstands des Dampferzeugers zu erkennen oder zu detektieren. Abhängig von dem aktuell vorliegenden Füllstand kann das Dampfbehandlungsgerät z.B. das mindestens eine Heizelement aktivieren oder deaktivieren, eine der Pumpen zum Nachgeben von Wasser aktivieren, usw.

Erfindungsgemäß ist von den drei Pumpen
- eine Pumpe ("erste Pumpe") zum Pumpen von Flüssigkeit aus dem Wassertank zu der Dampferzeugungseinrichtung vorgesehen bzw. eingerichtet,
- eine weitere Pumpe ("zweite Pumpe") zum Abpumpen von Flüssigkeit aus der Dampferzeugungseinrichtung zu einem Aufnahmebehälter vorgesehen und
- noch eine weitere Pumpe ("dritte Pumpe") zum Pumpen von Flüssigkeit aus dem Aufnahmebehälter in den Wassertank vorgesehen.

Die solche Funktion der drei Pumpen ermöglicht es vorteilhafterweise, neben einem üblichen Nachfüllen der Dampferzeugungseinrichtung mit Wasser aus dem Wassertank mittels der ersten Pumpe, Flüssigkeit grundsätzlich beliebiger Art in konstruktiv besonders einfacher Weise mittels der dritten Pumpe in das Gerät zu pumpen, mittels der zweiten Pumpe aus dem Gerät abzulassen und/oder mittels Aktivierung bzw. Betreiben aller drei Pumpen in dem Gerät zirkulieren zu lassen. Es ist eine Weiterbildung, dass die Pumpen unabhängig voneinander aktivierbar oder betreibbar sind, insbesondere mittels einer Steuereinrichtung des Dampfbehandlungsgeräts.

Der Aufnahmebehälter kann fest in dem Gerät verbaut sein, in dem Gerät entnehmbar angeordnet sein oder als eigenständiger Aufnahmebehälter mit dem Gerät fluidisch verbunden werden, z.B. über eine fluidische Verbindungsschnittstelle oder "Port" wie einen Anschlussstutzen oder einen Schlauch. Der Port ist insbesondere eine nach außen offene Durchlassöffnung, die insbesondere mittels eines Verschlusselements wie eines Stopfen oder einer Verschlusskappe o.ä. manuell durch einen Nutzer fluidisch verschließbar ist. Es ist eine Weiterbildung, dass ein saugseitiger Anschluss oder Eingang der ersten Pumpe mit dem Wassertank verbunden ist, ein saugseitiger Anschluss oder Ausgang der ersten Pumpe mit der Dampferzeugungseinrichtung verbunden ist, die Dampferzeugungseinrichtung ferner mit einem Eingang der zweiten Pumpe verbunden ist, ein Ausgang der zweiten Pumpe mit einer zu dem Aufnahmebehälter führenden Verbindungsleitung verbunden ist, ein Eingang der dritten Pumpe mit einer zu dem Aufnahmebehälter führenden Verbindungsleitung verbunden ist und ein Ausgang der dritten Pumpe mit einer zu dem Wassertank führenden Verbindungsleitung verbunden ist.

Die Pumpen sind Flüssigkeitspumpen. Erfindungsgemäß sind die Pumpen selbstsperrende Pumpen, d.h., dass die im inaktiven oder ausgeschalteten Zustand sperrend wirkt. Dadurch wird der Vorteil erreicht, dass die Zahl benötigter Bauteile gering gehalten werden kann. Jedoch kann grundsätzlich anstelle einer selbstsperrenden Pumpe auch eine funktional analoge Anordnung einer nichtsperrenden Pumpe (die im ausgeschalteten Zustand Flüssigkeit durchlässt) und eines Sperrventils verwendet werden, z.B. in fluidischer Reihenschaltung. Die Pumpe kann z.B. eine Verdrängerpumpe (volumetrische Pumpe) oder eine Kreiselpumpe sein. Dabei weist eine Kreiselpumpe den Vorteil auf, dass sie besonders leise und robust ist. Eine Verdrängerpumpe weist den Vorteil auf, dass sie besonders einfach selbstsperrend ausgebildet werden kann.

Es ist eine erfindungsgemäße Ausgestaltung, dass
- ein Eingang der ersten Pumpe und ein Ausgang der dritten Pumpe an ein gemeinsames erstes Anschlussstück angeschlossen sind, das mit dem Wassertank fluidisch verbunden ist,
- ein Ausgang der ersten Pumpe und ein Eingang der zweiten Pumpe an ein gemeinsames zweites Anschlussstück angeschlossen sind, das mit der Dampferzeugungseinrichtung fluidisch verbunden ist und
- ein Ausgang der zweiten Pumpe und ein Eingang der dritten Pumpe an ein gemeinsames drittes Anschlussstück angeschlossen sind, das mit einem Port für den Aufnahmebehälter fluidisch verbunden ist.

Dies ergibt den Vorteil einer konstruktiv besonders einfach und preiswert umsetzbaren Ausgestaltung, die zudem robust und besonders einfach verbaubar ist. Die Anschlussstücke können insbesondere als einseitig offene Rohre geformt sein und insbesondere zwei seitlich abgehende Anschlussstutzen zur Verbindung mit den entsprechenden Pumpen aufweisen, wobei dann die Verbbindung mit dem Wassertank, der Dampferzeugungseinrichtung bzw. dem Port z.B. über das stirnseitig offene Ende erfolgt. Die Anschlussstutzen können in einer besonders kompakt umsetzbaren Weiterbildung direkt an die entsprechenden Anschlüsse der Pumpen angeschlossen sein.

Alternativ kann der Ausgang der zweiten Pumpe mit einem ersten Port und der Eingang der dritten Pumpe mit einem zweiten Port fluidisch verbunden sein.

Erfindungsgemäß ist ein Durchfluss der Flüssigkeit durch eine jeweilige Pumpen bei nichtaktivierter oder nicht betriebener Pumpe gesperrt. Dazu ist die Pumpe als selbstsperrende Pumpe ausgebildet oder mit einem entsprechenden Ventil verschaltet.

Es ist eine Ausgestaltung, dass die Anschlussstücke geradlinige Anschlussstücke sind, die in X-Form zueinander angeordnet sind. So wird eine besonders kompakte Anordnung erreicht. Dies ist besonders vorteilhaft, wenn die Anschlussstücke oberhalb des Behandlungsraums angeordnet sind, da sie so sehr flach verbaubar sind. Unter einer X-Form kann insbesondere verstanden werden, dass zwei der Anschlussstücke schräg oder X-förmig zueinander angeordnet sind und das übrige Anschlussstück parallel zu einem der X-förmig zueinander angeordneten Anschlussstücke angeordnet ist.

Es ist eine Ausgestaltung, dass die Anschlussstücke mechanisch miteinander verbunden sind. So wird vorteilhafterweise eine besonders einfache Handhabbarkeit, Verbaubarkeit und zuverlässige Halterung in dem Gerät erreicht. Die mechanische Verbindung kann formschlüssig, kraftschlüssig und/oder stoffschlüssig sein. So können die beiden parallel zueinander anordneten Anschlussstücke einstückig hergestellt oder miteinander verschweißt, verklebt und/oder verklammert usw. sein. X-förmig zueinander angeordnete Anschlussstücke können z.B. formschlüssig ineinander eingesetzt, oder miteinander verschweißt, verklebt und/oder verklammert usw. sein.

Es ist eine Ausgestaltung, dass die Pumpen parallel nebeneinander angeordnet sind. So wird eine kompakte Bauweise unterstützt. Beispielsweise können die Pumpen nebeneinander in horizontaler Anordnung oberhalb des Behandlungsraums angeordnet sein. Auch wird so der Vorteil erreicht, dass die Pumpen einfach an in X-Form zueinander angeordnete Anschlussstücke anschließbar sind, insbesondere direkt (d.h., ohne flüssigkeitsführende Zwischenstücke wie Schläuche, Rohre usw.).

Es ist eine Ausgestaltung, dass die Pumpen in einer gemeinsamen Wasserauffangschale angeordnet sind. Die Wasserauffangschale ergibt den Vorteil, dass zumindest Leckagen der Pumpen, an den Pumpenanschlüssen aufgefangen werden können und Leckageflüssigkeit nicht unkontrolliert in das Gerät läuft und dort z.B. zu einer Korrosion führt. Es ist eine Weiterbildung, dass auch die Anschlussstücke in dieser Wasserauffangschale angeordnet sind. Dadurch können vorteilhafterweise auch Leckagen an den Anschlüssen der Anschlussstücke aufgefangen werden.

Es ist eine Ausgestaltung, dass die Wasserauffangschale einen Ablauf aufweist. So kann ein unkontrolliertes Überlaufen der Wasserauffangschale, zumindest mit Erreichen eines durch die Position des Abflusses vorgegebenen Pegels, verhindert werden.

Es ist eine Weiterbildung, dass der Ablauf in den Wassertank führt. So kann vorteilhafterweise die Leckageflüssigkeit wiederverwertet werden. Auch kann so auch einen gesonderten Ablaufkanal verzichtet werden. Es ist eine Weiterbildung, dass der Ablauf mit einem nach außen (außerhalb des Geräts) führenden Ablaufkanal verbunden ist. Dies ergibt den Vorteil, dass die Leckageflüssigkeit nicht in dem Gerät verbleibt. Der Ablaufkanal kann z.B. in einem Bodenbereich des Geräts nach außen führen.

Es ist eine Ausgestaltung, dass die Wasserauffangschale einstückig mit dem Wassertank hergestellt ist, z.B. als Kunststoff-Spritzgussteil. Dies vereinfacht eine Herstellung und Montage.

Es ist eine Ausgestaltung, dass das Dampfbehandlungsgerät in mindestens zwei Betriebsarten betreibbar ist, von denen
- in einer Dampfbehandlungsbetriebsart die zweite Pumpe und die dritte Pumpe deaktiviert sind; und
- in einer Reinigungsbetriebsart alle drei Pumpen aktivierbar sind.

So wird der Vorteil erreicht, dass auf resourcenschonende Weise eine übliche Dampfbehandlungsbetriebsart zum Behandeln von in dem Garraum befindlichem Gut und eine besonders effektive Reinigungsbetriebsart bereitstellbar sind. Das Dampfbehandlungsgerät kann mehrere Dampfbehandlungsbetriebsarten aufweisen. Das Dampfbehandlungsgerät kann auch noch weitere Betriebsarten aufweisen, z.B. eine Warmhaltebetriebsart, eine Pyrolysebetriebsart usw.

Speziell kann in der Reinigungsbetriebsart durch Aktivierung oder Betreiben aller drei Pumpen ein Kreislauf für Reinigungsflüssigkeit umgesetzt werden (z.B. im Rahmen eines Reinigungsprogramms), der eine besonders gründliche Reinigung ermöglicht. Die Reinigungsflüssigkeit kann eine desinfizierende oder antimikrobielle und/oder eine entkalkende Wirkung aufweisen. Die Reinigungsflüssigkeit kann also in einer Weiterbildung eine Entkalkungsflüssigkeit sein, ggf. mit zusätzlicher antimikrobieller Wirkung.

Die Aufgabe wird auch gelöst durch ein Verfahren zum Betreiben eines Dampfbehandlungsgeräts, bei dem in der Reinigungsbetriebsart
a) die dritte Pumpe aktiviert wird, um Reinigungsflüssigkeit aus dem Aufnahmebehälter in den Wassertank zu pumpen;
b) die erste Pumpe aktiviert wird, um die Reinigungsflüssigkeit aus dem Wassertank in die Dampferzeugungseinrichtung zu pumpen und
c) die zweite Pumpe aktiviert wird, um die Reinigungsflüssigkeit aus der Dampferzeugungseinrichtung in den Aufnahmebehälter zu pumpen.

Das Verfahren kann analog zu dem Dampfbehandlungsgerät ausgebildet werden und weist die gleichen Vorteile auf.

Es ist eine Ausgestaltung, dass die Schritte a) bis c) nacheinander durchlaufen werden, also Schritt b) erst durchgeführt wird, wenn Schritt a) abgeschlossen ist und Schritt c) erst durchgeführt wird, wenn Schritt b) abgeschlossen ist. So wird der Vorteil erreicht, dass eine ausreichend lange Einwirkdauer der Reinigungsflüssigkeit auf besonders einfache Weise erreichbar ist. Speziell kann so auch die Menge an benötigter Reinigungsflüssigkeit gering gehalten werden.

Es ist eine Ausgestaltung, dass zwischen den Schritten a) bis c) Einwirkpausen eingelegt werden. Diese können gleich sein oder sich unterscheiden. So wird der Vorteil erreicht, dass eine besonders effektive Reinigung erreicht wird, speziell der dem Wasser besonders lang ausgesetzten Komponenten Wassertank und Dampferzeugungseinrichtung. Die Einwirkpausen können gleich sein oder sich unterscheiden. So kann die Reinigungsflüssigkeit besonders lange in der Dampferzeugungseinrichtung gehalten werden, um deren typischerweise hohen Verkalkungsgrad entgegenzuwirken. Auch kann eine Reinigungsflüssigkeit besonders lange in dem Wassertank gehalten werden, um diesen besonders gründlich zu desinfizieren oder mikrobielle Filme usw. zu entfernen.

Es ist eine Ausgestaltung, dass die Schritte a) bis c) mehrfach durchlaufen werden. So kann ein Kreislauf für die Reinigungsflüssigkeit bereitgestellt werden, der bei geringer Menge der Reinigungsflüssigkeit eine besonders effektive Reinigung erlaubt. Bei dieser Ausgestaltung wird in Schritt c) in den Aufnahmebehälter zurückgepumpte Reinigungsflüssigkeit in einem folgenden Schritt a) wieder in den Wassertank gepumpt.

Es ist eine Weiterbildung, dass während der Reinigungsbetriebsart der Wassertank zumindest teilweise mit Wasser gefüllt ist und/oder Wasser zugesetzt wird. So wird der Vorteil erreicht, dass die Reinigungsflüssigkeit anfänglich als Konzentrat vorliegen kann, das durch das Wasser verdünnt wird. Dies erleichtert einem Nutzer die Handhabung und Lagerung der Reinigungsflüssigkeit.

In einer Weiterbildung kann ein Nutzer zur Durchführung der Reinigungsbetriebsart beispielsweise den Port mit einem Behälter (z.B. einem Eimer, einer Karaffe, einer Flasche oder einem speziell dazu vorgesehenen Behälter) fluidisch verbinden, in dem sich die Reinigungsflüssigkeit oder ein entsprechendes Konzentrat befindet, z.B. über einen Schlauch. Mittels der dritten Pumpe wird die Reinigungsflüssigkeit in den leeren oder teilweise mit Wasser gefüllten Wassertank gepumpt und ggf. noch Wasser in den Wassertank hinzugegeben. Dabei werden die von dem Port zu dem Wassertank führende Verbindungsleitung und der Wassertank gereinigt. Dann wird die Reinigungsflüssigkeit - optional nach einer vorgegebenen, ggf. von einem Verkalkungsgrad abhängigen ersten Einwirkpause in dem Wassertank - mittels der ersten Pumpe in die Dampferzeugungseinrichtung geleitet und reinigt dadurch die von dem Wassertank in die Dampferzeugungseinrichtung führende Verbindungsleitung (falls vorhanden) und die Dampferzeugungseinrichtung. Folgend wird - optional nach einer vorgegebenen, ggf. von einem Verkalkungsgrad abhängigen zweiten Einwirkpause in der Dampferzeugungseinrichtung - die Reinigungsflüssigkeit durch den Port zurück in den Behälter gepumpt. Dadurch wird auch die von der Dampferzeugungseinrichtung zum Port führende Verbindungsleitung gereinigt. In einer Variante ist der Reinigungsvorgang nun abgeschlossen. In einer anderen Variante werden die obigen Schritte erneut durchgeführt, z.B. für eine vorgegebene, ggf. von einem Verkalkungsgrad abhängige Zeitdauer.

Um eine Wirksamkeit der Reinigungsflüssigkeit bzw. des Reinigungsmittels zu erhöhen, kann die Dampferzeugungseinrichtung während der Reinigungsbetriebsart eingeschaltet werden, insbesondere so, dass sich die Temperatur der Reinigungsflüssigkeit erhöht, sie aber vorteilhafterweise nicht siedet.

Es ist eine Weiterbildung, dass in der Reinigungsbetriebsart dem Reinigungsvorgang ein Spülvorgang angeschlossen wird. So lassen sich vorteilhafterweise Reste der Reinigungsflüssigkeit aus dem Gerät entfernen. In einer Weiterbildung kann dies so umgesetzt werden, dass nach dem Reinigungsvorgang die verbrauchte Reinigungsflüssigkeit durch einen Nutzer aus dem Behälter entleert wird, der Behälter ausgespült wird und dann mit klarem Wasser gefüllt wird. Zur Durchführung des Spülvorgangs können dann zum Reinigungsvorgang analoge Schritte durchgeführt werden, ggf. ohne Einwirkpause(n). In einer besonders nutzfreundlichen Weiterbildung wird das Wasser vom Gerät, z.B. durch Einlass von Frischwasser aus dem Festwasseranschluss, bereitgestellt, so dass ein Nutzer den Port nur mit einem leeren Behälter verbinden muss.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein Ersatzschaltbild eines Flüssigkeitssystems eines Dampfbehandlungsgeräts mit drei Pumpen;
- Fig.2: zeigt als Schrägansicht ein Fig.1 entsprechendes Dampfbehandlungsgerät gemäß einem ersten Ausführungsbeispiel ohne Gehäuse und ohne Tür;
- Fig.3: zeigt als Schrägansicht einen vergrößerten Ausschnitt aus dem Dampfbehandlungsgerät gemäß dem ersten Ausführungsbeispiel im Bereich der drei Pumpen;
- Fig.4: zeigt in Frontansicht eine Skizze einer fluidischen Verschaltung der drei Pumpen; und
- Fig.5: zeigt als Schrägansicht einen vergrößerten Ausschnitt aus einem Dampfbehandlungsgerät mit drei Pumpen gemäß einem zweiten Ausführungsbeispiel im Bereich der drei Pumpen.

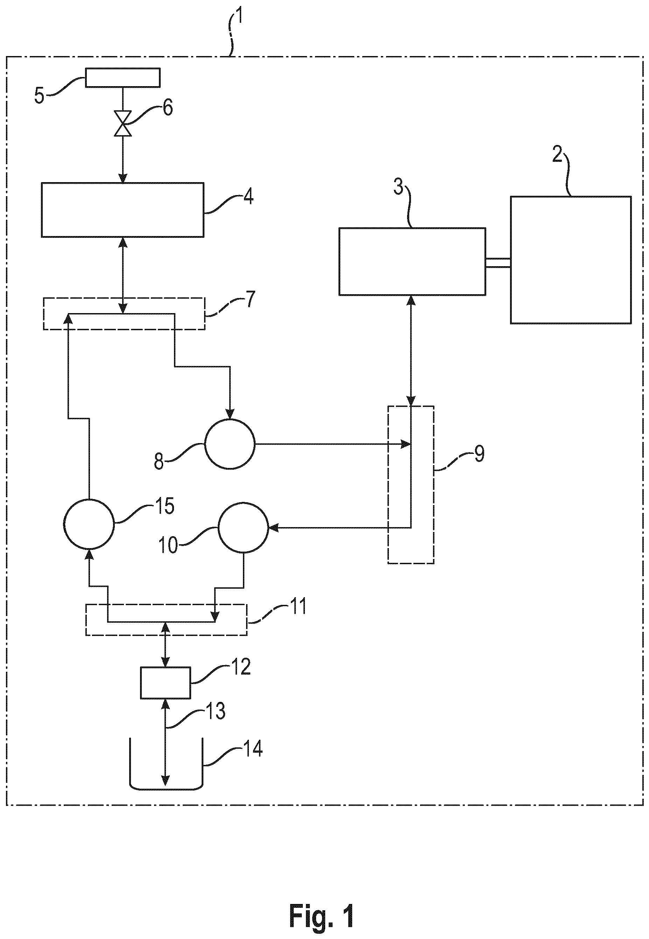

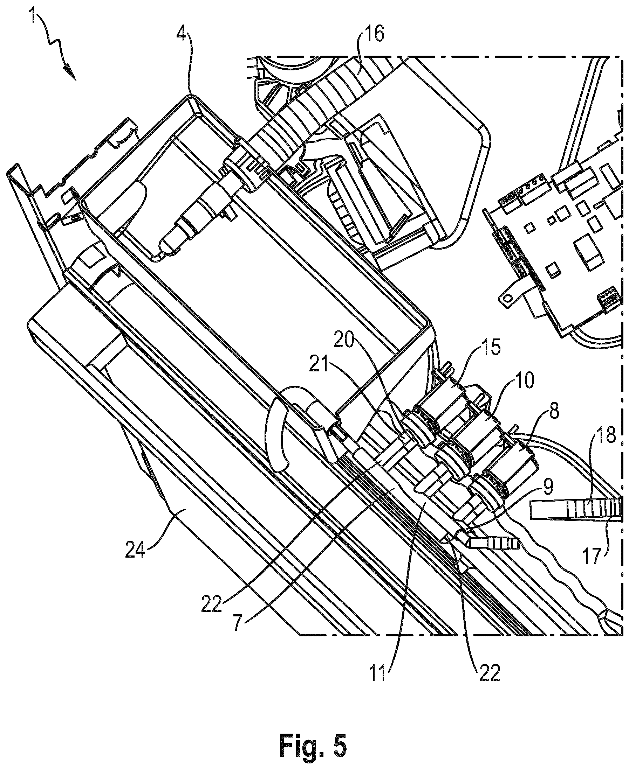

**Fig.1** zeigt ein Ersatzschaltbild eines Flüssigkeitssystems eines Dampfbehandlungsgeräts 1. Das Dampfbehandlungsgerät 1 kann z.B. ein Backofen mit Dampfbehandlungsfunktion, ein Mikrowellengerät mit Dampfbehandlungsfunktion oder Backofen mit Mikrowellen- und Dampfbehandlungsfunktion sein. Es weist einen mittels einer Tür 24 (siehe Fig.5) verschließbaren Dampfbehandlungsraum in Form eines Garraums 2 und eine Dampferzeugungseinrichtung auf. Die Dampferzeugungseinrichtung ist hier als ein außerhalb des Garraums 2 angeordneter Verdampfer 3 ausgebildet. Mittels des Verdampfer 3 kann darin enthaltende Flüssigkeit erhitzt, insbesondere auch zum Sieden gebracht werden. Während eines Dampfgarbetriebs wird der entstehende Wasserdampf aus dem Verdampfer 3 in den Garraum 2 geleitet, um dort befindliche Lebensmittel dampfzugaren.

Das Dampfbehandlungsgerät 1 weist ferner einen hier fest darin verbauten Wassertank 4 auf, mittels dessen der Verdampfer 3 mit Flüssigkeit versorgbar ist. Der Wassertank 4 ist mittels eines Festwasseranschlusses 5 mit Frischwasser befüllbar, z.B. durch entsprechendes Öffnen und Schließen eines Sperrventils 6.

Der Wassertank 4 ist über ein erstes Anschlussstück 7 mit einer Saugseite oder Eingang einer ersten selbstsperrenden Pumpe 8 fluidisch verbunden. Die Druckseite oder Ausgang der ersten Pumpe 8 ist über ein zweites Anschlussstück 9 mit dem Verdampfer 3 fluidisch verbunden. Das zweite Anschlussstück 9 ist ferner mit einem Eingang einer zweiten selbstsperrenden Pumpe 10 verbunden. Der Ausgang der ersten Pumpe 8 und der Eingang der zweiten Pumpe 10 sind somit über das zweite Anschlussstück 9 direkt fluidisch miteinander verbunden.

Der Ausgang der zweiten Pumpe 10 ist über ein drittes Anschlussstück 11 mit einem Port 12 verbunden, z.B. einem Anschlussstutzen. An den Port 12 kann eine Flüssigkeitsleitung 13 wie ein Schlauch o.ä. angeschlossen werden, um den Port fluidisch mit einem nutzerseitig bereitgestellten Behälter 14 wie einem Eimer, einer Karaffe o.ä. zu fluidisch verbinden. Dazu kann die Flüssigkeitsleitung 13 z.B. einfach in den Behälter 14 gehängt werden. Das dritte Anschlussstück 11 ist ferner mit einem saugseitigen Eingang einer dritten selbstsperrenden Pumpe 15 verbunden, die an ihrem Ausgang mit dem ersten Anschlussstück 7 und darüber mit dem Wassertank 4 fluidisch verbunden ist. Folglich sind auch der Ausgang der zweiten Pumpe 10 und der Eingang der dritten Pumpe 15 über das zweite Anschlussstück 9 direkt fluidisch miteinander verbunden, und der Ausgang der dritten Pumpe 15 und der Eingang der ersten Pumpe 8 sind über das dritte Anschlussstück 7 direkt fluidisch miteinander verbunden.

Während eines Dampfgarbetriebs sind die zweite Pumpe 10 und die dritte Pumpe 15 deaktiviert und somit fluidisch sperrend geschaltet. Bei Betrieb der ersten Pumpe 8 wird somit praktisch nur Wasser aus dem Wassertank 4 in den Verdampfer 3 gepumpt, um diesen mit Wasser zu versorgen.

Ein Reinigungsbetrieb kann z.B. folgendermaßen durchgeführt werden:
Zunächst verbindet ein Nutzer den Port 12 mit der Flüssigkeitsleitung 13 und steckt die Flüssigkeitsleitung 13 in den mit Reinigungsflüssigkeit zumindest teilweise gefüllten Behälter 14. Die Pumpen 8, 10 und 15 sind dabei deaktiviert.

Folgend wird die dritte Pumpe 15 aktiviert, um die Reinigungsflüssigkeit aus dem Behälter 14 zu saugen und durch das dritte Anschlussstück 7 in den ggf. bereits teilweise mit Wasser gefüllten Wassertank 4 zu leiten. Danach wird die die dritte Pumpe 15 deaktiviert. Alternativ oder zusätzlich kann Wasser aus dem Festwasseranschluss 5 in den Wassertank 4 eingeleitet werden. Ist die Reinigungsflüssigkeit bereits in dem Behälter 14 bereits ausreichend verdünnt, braucht kein zusätzliches Wasser zugegeben zu werden.

Die Reinigungsflüssigkeit kann nun optional für eine bestimmte Zeitdauer ("Einwirkpause") in dem Wassertank 4 belassen werden.

In einem nächsten Schritt wird die erste Pumpe 8 aktiviert, um die Reinigungsflüssigkeit aus dem Wassertank 4 durch das erste Anschlussstück 9 in den Verdampfer 3 zu pumpen. Danach wird die die erste Pumpe 8 deaktiviert.

Die Reinigungsflüssigkeit kann nun optional für eine bestimmte weitere Zeitdauer ("Einwirkpause") in dem Verdampfer 3 belassen werden. Der Verdampfer 3 kann dabei optional die Reinigungsflüssigkeit für eine verstärkte Reinigungswirkung erwärmen, jedoch nur auf eine Temperatur unterhalb einer Siedetemperatur (z.B. auf 40°C oder 50°C), um zu verhindern, dass Dampf der Reinigungsflüssigkeit in den Garraum 2 gelangt.

In einem nächsten Schritt wird die zweite Pumpe 10 aktiviert, um die Reinigungsflüssigkeit aus dem Verdampfer 3 durch das zweite Anschlussstück 11 und durch den Port 12 zurück in den Behälter 14 zu pumpen. Danach wird die die zweite Pumpe 10 deaktiviert.

Dieser Vorgang kann nun mehrmals - insbesondere ohne (weitere) Wasserzugabe - wiederholt werden.

Mit Beendigung des Reinigungsvorgangs kann sich diesem ein analoger Spülgang anschließen. Das dazu verwendete Wasser kann aus dem mit Klarwasser neu befüllten Behälter 14 oder aus dem Festwasseranschluss 5 stammen.

Alternativ können auch zwei oder alle drei Pumpen 8, 10, 15 gleichzeitig betrieben werden, z.B. um ein ununterbrochenes Kreisen der Reinigungsflüssigkeit und/oder des Klarwassers zu ermöglichen.

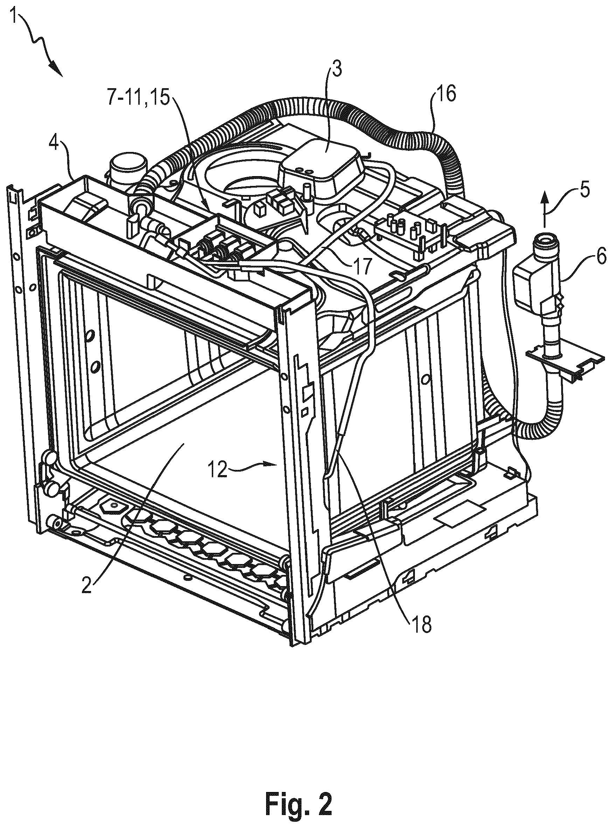

**Fig.2** zeigt in Schrägansicht das Dampfbehandlungsgerät 1 gemäß einem ersten Ausführungsbeispiel ohne Gehäuse und ohne Tür. Der Verdampfer 3, der Wassertank 4, die Pumpen 8, 10, 15 und die Anschlussstücke 7, 9, 11 sind oberhalb des Garraums 2 angeordnet. Der Festwasseranschluss 5 ist an ein Aquastop-Ventil 6 anschließbar, das Frischwasser über eine zumindest abschnittsweise schlauchartige Verbindungsleitung 16 in den Wassertank 4 leitbar ist. Das erste Anschlussstück 9 ist über eine weitere Verbindungsleitung 17 mit dem Verdampfer 3 fluidisch verbunden. Das zweite Anschlussstück 11 ist über noch eine weitere Verbindungsleitung 18 mit dem Port 12 fluidisch verbunden. Der Port 12 ist hier für einen Nutzer an einer Innenseite des Garraums 2 zugänglich.

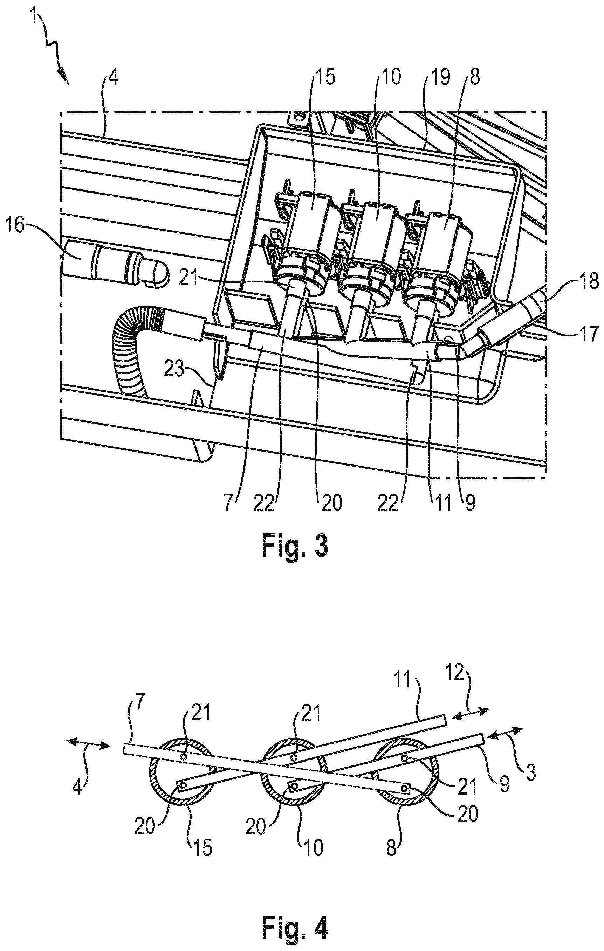

**Fig.3** zeigt als Schrägansicht einen vergrößerten Ausschnitt aus dem Dampfbehandlungsgerät 1 im Bereich der drei Pumpen 8, 10, 15 und der Anschlussstücke 7, 9, 11.

Die Pumpen 8, 10 und 15 und die Anschlussstücke 7, 9, 11 sind in einer Wasserauffangschale 19 angeordnet und befestigt, und zwar parallel nebeneinander angeordnet und ausgerichtet. Die Pumpen 8, 10 und 15 sind insbesondere von gleicher Art und weisen als Eingang einen Eingangsstutzen 20 und darüber als Ausgang einen Ausgangsstutzen 21 auf, wie beispielhaft anhand der dritten Pumpe 15 dargestellt.

Die Anschlussstücke 7, 9 und 11 sind als geradlinige, rohrförmige Anschlussstücke ausgebildet, von denen seitlich in die gleiche Richtung jeweils zwei Anschlussstutzen 22 zu den Pumpen 8, 10 und 15 abgehen. Stirnseitig sind die Anschlussstücke 7, 9 und 11 mit dem Wassertank 4, dem Verdampfer bzw. mit dem Port 12 verbunden.

Die beiden Anschlussstücke 9 und 11 sind parallel zueinander angeordnet, während das Anschlussstück 7 dazu schräg steht, so dass die Anschlussstücke 7, 9 und 11 in X-Form zueinander angeordnet sind. Insbesondere können zwei oder drei der Anschlussstücke 7, 9 und 11 mechanisch mit einander verbunden sein, was deren Habhabbarkeit - z.B. bei der Montage - erleichtert und eine besonders zuverlässige Anordnung ergibt.

**Fig.4** zeigt in Frontansicht auf die anschlussführenden Stirnseiten der Pumpen 8, 10 und 15 eine Skizze ihrer fluidischen Verschaltung mit den Anschlussstücken 7, 9 und 11.

Wieder zurückkehrend zu Fig.3 dient die Wasserauffangschale 19 dazu, an den Pumpen 8, 10 und 15 und den Anschlussstücke 7, 9 und 11 erzeugte freie Flüssigkeit wie Kondenswasser, Leckageflüssigkeit usw. aufzufangen und abzuleiten. In einer Variante öffnet sich die Wasserauffangschale 19 dazu an einem Durchbruch 23 in den Wassertank 4, so dass die freie Flüssigkeit in den Wassertank 4 ablaufen kann. In einer anderen Variante ist die Wasserauffangschale 19 dazu vorgesehen (d.h., geformt und angeordnet), die davon aufgefangene Flüssigkeit in einen Abfluss (o. Abb.) zu leiten. Im letzteren Fall kann ebenfalls der Durchbruch 23 vorhanden sein, und zwar um aus dem Wassertank 4 in die Wasserauffangschale 19 überlaufende Flüssigkeit in den Abfluss zu leiten. So wird ein Überlaufen des Wassertanks 4 über seine oberen Ränder verhindert.

Die Wasserschale 19 und der Wassertank 4 sind hier als ein einstückig hergestelltes Bauteil ausgebildet, beispielsweise ein Kunststoff-Spritzgussteil.

**Fig.4** zeigt als Schrägansicht einen vergrößerten Ausschnitt aus einer Variante des Dampfbehandlungsgeräts 1 im Bereich der drei Pumpen 8, 10, 15. In dieser Variante sind die Pumpen 8, 10, 15 und die Anschlussstücke 7, 9 und 11 nicht in der Wasserschale 19, sondern direkt an der Oberseite des Garraums 2 angeordnet. Zudem ist nun eine den Garraum 2 frontseitig verschließende Tür 24 eingezeichnet.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Dampfbehandlungsgerät
- 2: Garraum
- 3: Verdampfer
- 4: Wassertank
- 5: Festwasseranschlusses
- 6: Sperrventils
- 7: Erstes Anschlussstück
- 8: Erste Pumpe
- 9: Zweites Anschlussstück
- 10: Zweite Pumpe
- 11: Drittes Anschlussstück
- 12: Port
- 13: Flüssigkeitsleitung
- 14: Behälter
- 15: Dritte Pumpe
- 16: Verbindungsleitung
- 17: Verbindungsleitung
- 18: Verbindungsleitung
- 19: Wasserauffangschale
- 20: Eingangsstutzen
- 21: Ausgangsstutzen
- 22: Anschlussstutzen
- 23: Durchbruch
- 24: Tür

## Patentansprüche

1. Haushalts-Dampfbehandlungsgerät (1), aufweisend
- einen Dampfbehandlungsraum (2),
- eine Dampferzeugungseinrichtung (3),
- einen Wassertank (4) zum Bereitstellen von Flüssigkeit für die Dampferzeugungseinrichtung (3), einen Aufnahmebehälter (14) und
- eine Pumpe zum Pumpen von Flüssigkeit aus dem Aufnahmebehälter ( 14) in den Wassertank (4),
**dadurch gekennzeichnet, dass** das Dampfbehandlungsgerät (1) ferner
- eine erste Pumpe (8) zum Pumpen von Flüssigkeit aus dem Wassertank (4) zu der Dampferzeugungseinrichtung (3) und
- eine zweite Pumpe (10) zum Abpumpen von Flüssigkeit aus der Dampferzeugungseinrichtung (3) zu dem Aufnahmebehälter (14) aufweist, dass
- die Pumpe zum Pumpen von Flüssigkeit aus dem Aufnahmebehälter ( 14) in den Wassertank (4) eine dritte Pumpe (15) ist und dass
- ein Eingang (20) der ersten Pumpe (8) und ein Ausgang (21) der dritten Pumpe (15) an ein gemeinsames erstes Anschlussstück (7) angeschlossen sind, das mit dem Wassertank (4) fluidisch verbunden ist,
- ein Ausgang (21) der ersten Pumpe (8) und ein Eingang (20) der zweiten Pumpe (10) an ein gemeinsames zweites Anschlussstück (9) angeschlossen sind, das mit der Dampferzeugungseinrichtung (3) fluidisch verbunden ist und
- ein Ausgang (21) der zweiten Pumpe und ein Eingang (20) der dritten Pumpe (15) an ein gemeinsames drittes Anschlussstück (11) angeschlossen sind, das mit einem Port (12) für den Aufnahmebehälter (14) fluidisch verbunden ist,
- die Pumpen (8, 10, 15) selbstsperrende Pumpen, oder nichtsperrenden Pumpen mit jeweils einem Sperrventil, sind.

2. Haushalts-Dampfbehandlungsgerät (1) nach Anspruch 1, **dadurch gekennzeichnet, dass** die Anschlussstücke (7, 9, 11) als einseitig offene Rohre geformt sind und zwei seitlich abgehende Anschlussstutzen (21, 22) zur Verbindung mit den entsprechenden Pumpen (8, 10, 15) aufweisen, wobei die Verbindung mit dem Wassertank (4), der Dampferzeugungseinrichtung (3) bzw. dem Aufnahmebehälter (14) über ein entsprechendes stirnseitig offenes Ende erfolgt.

3. Haushalts-Dampfbehandlungsgerät (1) nach einem der vorhergehenden Ansprüche, **dadurch gekennzeichnet, dass** die Pumpen (8, 10, 15) parallel nebeneinander angeordnet sind und dass die Anschlussstücke (7, 9, 11) geradlinige Anschlussstücke sind, die in X-Form zueinander angeordnet sind.

4. Haushalts-Dampfbehandlungsgerät (1) nach einem der vorhergehenden Ansprüche, **dadurch gekennzeichnet, dass** die Anschlussstücke (7, 9, 11) mechanisch miteinander verbunden sind.

5. Haushalts-Dampfbehandlungsgerät (1) nach einem der vorhergehenden Ansprüche, **dadurch gekennzeichnet, dass** die Pumpen (8, 10, 15) und/oder die Anschlussstücke (7, 9, 11) in einer gemeinsamen Wasserauffangschale (19) angeordnet sind.

6. Haushalts-Dampfbehandlungsgerät (1) nach Anspruch 5, **dadurch gekennzeichnet, dass** die Wasserauffangschale (19) einen in den Wassertank (4) führenden Ablauf aufweist.

7. Haushalts-Dampfbehandlungsgerät (1) nach einem der Ansprüche 5 bis 6, **dadurch gekennzeichnet, dass** die Wasserauffangschale (19) einstückig mit dem Wassertank (4) hergestellt ist.

8. Haushalts-Dampfbehandlungsgerät (1) nach einem der vorhergehenden Ansprüche, **dadurch gekennzeichnet, dass** das Dampfbehandlungsgerät (1) in mindestens zwei Betriebsarten betreibbar ist, von denen
- in einer Dampfbehandlungsbetriebsart die zweite Pumpe (10) und die dritte Pumpe (15) deaktiviert sind; und
- in einer Reinigungsbetriebsart alle Pumpen (8, 10, 15) aktivierbar sind.

9. Verfahren zum Betreiben eines Haushalts-Dampfbehandlungsgeräts (1) nach Anspruch 8, bei dem in der Reinigungsbetriebsart
a) die dritte Pumpe (15) aktiviert wird, um Reinigungsflüssigkeit aus dem Aufnahmebehälter (14) in den Wassertank (4) zu pumpen;
b) die erste Pumpe (8) aktiviert wird, um die Reinigungsflüssigkeit aus dem Wassertank (4) in die Dampferzeugungseinrichtung (3) zu pumpen und
c) die zweite Pumpe (10) aktiviert wird, um die Reinigungsflüssigkeit aus der Dampferzeugungseinrichtung (3) in die den Aufnahmebehälter (14) zu pumpen.

10. Verfahren nach Anspruch 9, bei dem die Schritte a) bis c) nacheinander durchlaufen werden.

11. Verfahren nach Anspruch 10, bei dem zwischen den Schritten a) bis c) Einwirkpausen eingelegt werden.

12. Verfahren nach einem der Ansprüche 10 bis 11, bei dem die Schritte a) bis c) mehrfach durchlaufen werden.

## Claims

1. Household steam treatment appliance (1), having
- a steam treatment compartment (2),
- a steam generation facility (3),
- a water tank (4) for providing liquid for the steam generation facility (3), an accommodating container (14) and
- a pump for pumping liquid out of the accommodating container (14) and into the water tank (4),
**characterised in that** the steam treatment appliance (1) furthermore has
- a first pump (8) for pumping liquid out of the water tank (4) and to the steam generation facility (3), and
- a second pump (10) for pumping liquid out of the steam generation facility (3) and to the accommodating container (14),
- the pump for pumping liquid out of the accommodating container (14) and into the water tank (4) is a third pump (15), and
- an input (20) of the first pump (8) and an output (21) of the third pump (15) are connected to a shared first connecting piece (7), which is fluidically connected to the water tank (4),
- an output (21) of the first pump (8) and an input (20) of the second pump (10) are connected to a shared second connecting piece (9), which is fluidically connected to the steam generation facility (3) and
- an output (21) of the second pump and an input (20) of the third pump (15) are connected to a shared third connecting piece (11), which is fluidically connected to a port (12) for the accommodating container (14),
- the pumps (8, 10, 15) are self-locking pumps, or non-locking pumps with a locking valve in each case.

2. Household steam treatment appliance (1) according to claim 1, **characterised in that** the connecting pieces (7, 9, 11) are shaped as tubes open on one side, and have two connection nozzles (21, 22) branching off from the side for connecting to the corresponding pumps (8, 10, 15), wherein the connection to the water tank (4), the steam generation facility (3) or the accommodating container (14) takes place via a corresponding end open on the end face.

3. Household steam treatment appliance (1) according to one of the preceding claims, **characterised in that** the pumps (8, 10, 15) are arranged in parallel adjacent to one another and the connecting pieces (7, 9, 11) are straight-line connecting pieces, which are arranged in an X-shape in relation to one another.

4. Household steam treatment appliance (1) according to one of the preceding claims, **characterised in that** the connecting pieces (7, 9, 11) are connected to one another mechanically.

5. Household steam treatment appliance (1) according to one of the preceding claims, **characterised in that** the pumps (8, 10, 15) and/or the connecting pieces (7, 9, 11) are arranged in a shared water collection dish (19).

6. Household steam treatment appliance (1) according to claim 5, **characterised in that** the water collection dish (19) has a drain that leads into the water tank (4).

7. Household steam treatment appliance (1) according to one of claims 5 to 6, **characterised in that** the water collection dish (19) is produced in one piece with the water tank (4).

8. Household steam treatment appliance (1) according to one of the preceding claims, **characterised in that** the steam treatment appliance (1) can be operated in at least two operating modes, of which
- in a steam treatment operating mode the second pump (10) and the third pump (15) are deactivated; and
- in a cleaning operating mode all the pumps (8, 10, 15) can be activated.

9. Method for operating a household steam treatment appliance (1) according to claim 8, in which, in the cleaning operating mode,
a) the third pump (15) is activated in order to pump cleaning liquid out of the accommodating container (14) and into the water tank (4);
b) the first pump (8) is activated in order to pump the cleaning liquid out of the water tank (4) and into the steam generation facility (3) and
c) the second pump (10) is activated in order to pump the cleaning liquid out of the steam generation facility (3) and into the accommodating container (14).

10. Method according to claim 9, in which steps a) to c) are run through in succession.

11. Method according to claim 10, in which exposure pauses are inserted between steps a) to c).

12. Method according to one of claims 10 to 11, in which steps a) to c) are run through multiple times.

## Revendications

1. Appareil de traitement à la vapeur domestique (1), comprenant :
- un espace de traitement à la vapeur (2),
- un dispositif générateur de vapeur (3),
- un réservoir d'eau (4) pour fournir un liquide pour le dispositif générateur de vapeur (3), un récipient de réception (14), et
- une pompe destinée à pomper du liquide hors du récipient de réception (14) dans le réservoir d'eau (4),
**caractérisé en ce que** l'appareil de traitement à la vapeur (1) comprend en outre :
- une première pompe (8) destinée à pomper du liquide hors du réservoir d'eau (4) jusqu'au dispositif générateur de vapeur (3), et
- une deuxième pompe (10) destinée à évacuer par pompage du liquide hors du dispositif générateur de vapeur (3) vers le récipient de réception (14), **en ce que**
- la pompe pour pomper le liquide hors du récipient de réception (14) jusque dans le réservoir d'eau (4) est une troisième pompe (15), et **en ce que**
- une entrée (20) de la première pompe (8) et une sortie (21) de la troisième pompe (15) sont reliées à une première pièce de raccordement commune (7), qui est reliée fluidiquement au réservoir d'eau (4),
- une sortie (21) de la première pompe (8) et une entrée (20) de la deuxième pompe (10) sont reliées à une deuxième pièce de raccordement commune (9), qui est reliée fluidiquement au dispositif générateur de vapeur (3),
- une sortie (21) de la deuxième pompe et une entrée (20) de la troisième pompe (15) sont reliées à une troisième pièce de raccordement commune (11), qui est reliée fluidiquement à un port (12) du récipient de réception (14), et
- les pompes (8, 10, 15) sont des pompes à auto-blocage, ou des pompes sans auto-blocage comportant respectivement un clapet anti-retour.

2. Appareil de traitement à la vapeur domestique (1) selon la revendication 1, **caractérisé en ce que** les pièces de raccordement (7, 9, 11) sont formées sous forme de tubes ouverts sur un côté et comprennent deux tubulures de raccordement (21, 22) sortant latéralement pour se raccorder aux pompes correspondantes (8, 10, 15), dans lequel la liaison avec le réservoir d'eau (4), le dispositif générateur de vapeur (3) ou le récipient de réception (14) s'effectue par une extrémité ouverte du côté frontal correspondante.

3. Appareil de traitement à la vapeur domestique (1) selon l'une des revendications précédentes, **caractérisé en ce que** les pompes (8, 10, 15) sont disposées parallèlement l'une à côté de l'autre et **en ce que** les pièces de raccordement (7, 9, 11) sont des pièces de raccordement rectilignes, qui sont disposées l'une par rapport à l'autre en forme de X.

4. Appareil de traitement à la vapeur domestique (1) selon l'une des revendications précédentes, **caractérisé en ce que** les pièces de raccordement (7, 9, 11) sont raccordées mécaniquement l'une à l'autre.

5. Appareil de traitement à la vapeur domestique (1) selon l'une des revendications précédentes, **caractérisé en ce que** les pompes (8, 10, 15) et/ou les pièces de raccordement (7, 9, 11) sont disposées dans un bac collecteur d'eau commun (19).

6. Appareil de traitement à la vapeur domestique (1) selon la revendication 5, **caractérisé en ce que** le bac collecteur d'eau (19) comprend un écoulement conduisant au réservoir d'eau (4).

7. Appareil de traitement à la vapeur domestique (1) selon l'une des revendications 5 à 6, **caractérisé en ce que** le bac collecteur d'eau (19) est fabriqué d'un seul bloc avec le réservoir d'eau (4).

8. Appareil de traitement à la vapeur domestique (1) selon l'une des revendications précédentes, **caractérisé en ce que** l'appareil de traitement à la vapeur (1) peut fonctionner dans au moins deux modes de fonctionnement, parmi lesquels
- dans un mode de fonctionnement de traitement à la vapeur, la deuxième pompe (10) et la troisième pompe (15) sont désactivées, et
- dans un mode de fonctionnement en nettoyage, toutes les pompes (8, 10, 15) peuvent être activées.

9. Procédé de fonctionnement d'un appareil de traitement à la vapeur domestique (1) selon la revendication 8, dans lequel, dans le mode de fonctionnement en nettoyage,
a) la troisième pompe (15) est activée, pour pomper du liquide de nettoyage hors du récipient de réception (14) dans le réservoir d'eau (4),
b) la première pompe (8) est activée, afin de pomper le liquide de nettoyage hors du réservoir d'eau (4) dans le dispositif générateur de vapeur (3), et
c) la deuxième pompe (10) est activée, afin de pomper le liquide de nettoyage hors du dispositif générateur de vapeur (3) dans le récipient de réception (14).

10. Procédé selon la revendication 9, dans lequel les étapes a) à c) sont exécutées l'une après l'autre.

11. Procédé selon la revendication 10, dans lequel des arrêts d'opération sont introduits entre les étapes a) à c).

12. Procédé selon l'une des revendications 10 à 11, dans lequel les étapes a) à c) sont exécutées plusieurs fois.
